# DEMANDE DE BREVET EUROPEEN

(11) **EP 4 517 129 A1**
(43) Date de publication de la demande: **05.03.2025**
(21) Numéro de dépôt: 24193384.5
(22) Date de dépôt: 07.08.2024
(51) Int. Cl.: F16F 7/12, B62D 21/15, B62D 25/02, B60K 1/04

(54) **STRUCTURE D'ABSORPTION DE CHOC, NOTAMMENT POUR VEHICULE AUTOMOBILE**

(30) Priorité: 01.09.2023 FR 2309190; 01.03.2024 FR 2402074
(71) Demandeur: VALEO SYSTEMES THERMIQUES, 78320 Le Mesnil-Saint-Denis (FR)
(72) Inventeur: BESNARD, Jean-Yves, 78322 Le Mesnil-Saint-Denis Cedex (FR); DA-COSTA-PITO, Sergio, 78322 Le Mesnil-Saint-Denis Cedex (FR); GERBER, Sylvain, 78322 Le Mesnil-Saint-Denis Cedex (FR)
(74) Mandataire: Valeo Systèmes Thermiques

(57) **Abrégé**

L'invention a pour objet une structure d'absorption de choc (50), notamment pour véhicule automobile, présentant une direction principale (DP) d'absorption de choc, et comportant au moins un organe profilé (51) en matière composite contenant des fibres de renfort, cet organe profilé présentant une forme sensiblement cylindrique ayant une droite génératrice, cette droite génératrice étant orientée suivant la direction principale d'absorption de choc.

## Description

La présente invention concerne une structure d'absorption de choc, notamment pour véhicule automobile.

Sur les véhicules hybrides ou électriques actuels, les modules de batterie sont souvent placés sur un plancher du véhicule, notamment sous les sièges. L'intégration de modules de batterie dans la voiture nécessite qu'il y ait un maximum d'espace pour leur stockage et une protection fiable des cellules de batterie contre des chocs, par exemple contre des chocs latéraux qui se produisent lorsque la voiture percute un poteau sur le côté de la voiture.

Une tendance actuelle est d'utiliser, pour la protection des modules de batterie, des profilés en acier ou en aluminium placés au niveau des longerons. Ces profilés extrudés sont plus lourds et engendre un coût additionnel. De plus l'utilisation d'aluminium augmente l'empreinte CO2.

L'invention vise à résoudre au moins certains des inconvénients précités.

La présente invention a ainsi pour objet une structure d'absorption de choc, notamment pour véhicule automobile, présentant une direction principale d'absorption de choc, et comportant au moins un organe profilé en matière composite contenant des fibres de renfort, cet organe profilé présentant une forme sensiblement cylindrique ayant une droite génératrice, cette droite génératrice étant orientée suivant la direction principale d'absorption de choc.

Dans le cas d'un organe profilé obtenu par pultrusion, les fibres de renfort sont orientées selon la droite génératrice.

Un cylindre est une surface dans l'espace définie par des droites parallèles (les génératrices). Une forme cylindrique peut être de contour fermé ou ouvert, de section circulaire ou non circulaire. Une forme ondulée est un exemple de forme cylindrique.

Dans la présente invention, l'organe profilé peut présenter une forme exactement cylindrique ou, en variante, une forme qui est légèrement évasée suivant la droite génératrice. Dans ce dernier cas, l'organe profilé peut être de forme tronconique avec un angle par rapport à la droite génératrice qui est relativement faible, par exemple un angle inférieur ou égal à 10°.

Selon l'un des aspects de l'invention, la structure d'absorption de choc présente une forme générale longiligne avec un axe longitudinal, et la droite génératrice de l'organe profilé est sensiblement perpendiculaire à l'axe longitudinal de la structure d'absorption de choc.

Selon l'un des aspects de l'invention, la structure d'absorption de choc présente une longueur mesurée suivant l'axe longitudinal, d'au moins 20 cm, notamment d'au moins 50 cm, ou d'au moins 70 cm ou 80 cm ou 1 m.

Selon l'un des aspects de l'invention, la structure d'absorption de choc comporte une pluralité d'organes profilés disposés avec leurs droites génératrices toutes orientée suivant la direction principale d'absorption de choc.

Selon l'un des aspects de l'invention, le nombre d'organes profilés au sein de la structure d'absorption de choc est compris entre 5 et 50, notamment entre 20 et 40.

Selon l'un des aspects de l'invention, la pluralité d'organes profilés sont disposés côte à côte, notamment suivant une ou plusieurs rangées.

Selon l'un des aspects de l'invention, la pluralité d'organes profilés sont disposés avec contact mutuel entre eux, notamment en étant tangents deux à deux.

Selon l'un des aspects de l'invention, la pluralité d'organes profilés sont identiques entre eux.

En variante, les profilés diffèrent entre eux, en ayant des formes et/ou des dimensions différentes.

Selon l'un des aspects de l'invention, l'organe profilé présente une forme cylindrique de révolution, à savoir de section circulaire.

Selon l'un des aspects de l'invention, l'organe profilé présente un rebord chanfreiné, notamment issu d'une coupe géométrique entre le cylindre et un plan de coupe oblique.

Selon l'un des aspects de l'invention, l'organe profilé présente un diamètre compris entre 10 et 500 mm, de préférence entre 10 et 250 mm, et encore de préférence entre 40mm et 100mm

Selon un autre des aspects de l'invention, l'organe profilé comprend, dans une section transversale perpendiculaire à sa droite génératrice, au moins un contour ouvert configuré pour recevoir un contour de l'organe profilé voisin.

Selon l'un des aspects de l'invention, le contour ouvert présente une forme en C.

Selon l'un des aspects de l'invention, l'organe profilé comprend, en section transversale, un contour fermé et un contour ouvert accolés l'un à l'autre.

Selon l'un des aspects de l'invention, le diamètre du contour fermé est plus petit que le diamètre du contour ouvert.

Selon l'un des aspects de l'invention, le contour ouvert de l'un des organes profilés est configuré pour recevoir le contour fermé de l'autre organe profilé voisin.

Selon l'un des aspects de l'invention, le contour fermé de l'un des organes profilés est inséré dans le contour ouvert de l'autre organe profilé en faisant glisser le contour fermé dans le contour ouvert suivant la direction de la droite génératrice.

Selon l'un des aspects de l'invention, cette manière d'emboîter deux organes profilés voisins ne nécessite pas la déformation des organes profilés.

Selon l'un des aspects de l'invention, la structure d'absorption de choc comprend une succession d'organes profilés s'emboîtant dans l'organe profilé voisin.

Selon l'un des aspects de l'invention, l'organe profilé est obtenu par extrusion ou pultrusion.

Dans une variante de réalisation de l'invention, l'organe profilé est formé par au moins une feuille en matière composite contenant notamment des fibres de renfort.

Selon l'un des aspects de l'invention, le ou les organes profilés sont réalisés par une seule feuille en matière composite.

Selon l'un des aspects de l'invention, la feuille présente une forme ondulée.

Selon l'un des aspects de l'invention, cette feuille présente au moins 10 ou 20 ondulations.

Selon l'un des aspects de l'invention, les ondulations successives sont identiques. En variante, dans la succession d'ondulations, certaines peuvent présenter des formes et/ou des dimensions différentes.

Selon l'un des aspects de l'invention, les ondulations se développent le long de l'axe longitudinal de la structure d'absorption de choc.

Selon l'un des aspects de l'invention, la feuille comporte des rebords chanfreinés à certaines des ondulations, notamment à chacune des ondulations.

Selon l'un des aspects de l'invention, la feuille est une plaque de composite pré-imprégné dont les ondulations sont obtenues par thermoformage, notamment dans un moule. La feuille pourrait aussi être obtenue par extrusion ou pultrusion par morceaux et découpes pour avoir la largeur voulue (par exemple une largeur correspondant à la direction transverse du véhicule) et avec assemblage des morceaux.

Selon l'un des aspects de l'invention, la structure d'absorption de choc comporte des formes surmoulées sur le ou les organes profilés.

Selon l'un des aspects de l'invention, les formes surmoulées comprennent au moins une paroi, notamment plusieurs parois.

Selon l'un des aspects de l'invention, les parois peuvent être parallèles.

Dans le cas d'une feuille ondulée, les formes surmoulées comportent des formes en ondulation, notamment des formes en ondulation qui sont complémentaires des ondulations de la feuille.

La structure d'absorption de choc peut ainsi comporter des cylindres alignés côté à côte, chaque cylindre (ou organe profilé) étant formé pour moitié par la feuille et pour moitié par une forme surmoulée.

Dans ce cas, la feuille et les formes surmoulées définissent une pièce monobloc.

En variante, le ou les organes profilés sont formés par deux feuilles en matière composite, et chaque organe profilé est notamment formé pour moitié par l'une des feuilles et pour moitié par l'autre des feuilles. Par exemple, chaque feuille forme une succession de demi-cylindres, et les demi-cylindriques des deux feuilles sont en regard deux à deux pour former une rangée de cylindriques complets qui sont les organes profilés.

Dans cet exemple de réalisation de l'invention, les deux feuilles sont assemblées ensemble, par exemple par soudure.

Les demi-cylindriques de chaque feuille sont notamment tangents à un plan géométrique. Ce plan géométrique définit un plan de joint entre les deux feuilles.

D'une manière générale, le ou les cylindriques peuvent être légèrement évasés, notamment avec un angle d'évasement inférieur ou égal à 10°.

Selon l'un des aspects de l'invention, l'une au moins des feuilles, notamment les deux feuilles, est/sont réalisée(s) avec des formes d'interface, notamment obtenues par surmoulage, configurées pour, par exemple, permettre la fixation de la structure d'absorption de choc sur une partie structurelle d'un véhicule automobile.

Selon l'un des aspects de l'invention, les formes d'interface, notamment surmoulées, sont présentes sur toute la longueur de la feuille.

Selon l'un des aspects de l'invention, les formes d'interface définissent des bandeaux de matière, par exemple deux bandeaux de matière parallèles, qui longent le ou les bords des ondulations sur les feuilles.

Selon un autre aspect de l'invention, les formes d'interface définissent une paroi avant et une paroi arrière, notamment planes et parallèles, entre lesquelles s'étendent les demi-cylindriques formés par la feuille. Par exemple, les extrémités opposées de chaque cylindre sont respectivement sur la paroi avant et sur la paroi arrière.

Selon l'un des aspects de l'invention, la paroi avant et/ou la paroi arrière présente une joue (notamment de forme sensiblement ronde ou ovale) placée dans une encoche d'une forme surmoulée de l'autre feuille. Ainsi la joue permet de fermer une extrémité d'un cylindrique issu de l'assemblage de deux demi-cylindriques des deux feuilles.

Les formes d'interface (qui sont notamment surmoulées) peuvent être configurées pour réaliser la jonction, notamment soudée, entre les deux feuilles.

Selon l'un des aspects de l'invention, les formes d'interface définissent des barreaux, notamment parallèles entre eux, chaque barreau étant présent à la jonction entre deux demi-cylindres voisins de la feuille.

Bien entendu, les formes d'interface peuvent présenter d'autres géométries que celles décrites plus haut.

D'une manière générale, comme vu plus haut, les ondulations de la structure d'absorption de choc peuvent être formées par une seule feuille avec, en plus, des formes surmoulées, ou, en variante, par deux feuilles (éventuellement avec chacune des formes d'interface) qui sont assemblées par exemple en étant soudées ensemble.

Selon l'un des aspects de l'invention, la structure d'absorption de choc comporte une plaque de renfort, par exemple en acier ou en aluminium ou en matériau composite, placée sur un côté des organes profilés, notamment sur le côté qui est l'arrière des organes profilés (c'est-à-dire par exemple du côté le plus intérieur par rapport au véhicule). Cette plaque de renfort permet de renforcer la tenue mécanique de la structure d'absorption de choc. Cette plaque de renfort s'étend notamment tout le long de la rangée d'organes profilés. La plaque de renfort est sensiblement rectangulaire, avec éventuellement des ajours.

Selon l'un des aspects de l'invention, la structure d'absorption de choc est configurée pour être placée sur un bord latéral d'un véhicule automobile, par exemple à l'intérieur d'un longeron.

Dans ce cas, la structure d'absorption de choc peut être disposée avant assemblage du longeron qui comporte par exemple deux formes, par exemple deux demi-coquilles complémentaires, le plus souvent métalliques et qui sont assemblées par soudage.

Selon l'un des aspects de l'invention, la structure d'absorption de choc est configurée pour être intégrée sur une ou des traverses de plancher.

Selon l'un des aspects de l'invention, la structure d'absorption de choc est configurée pour être placée sur un bord latéral d'un dispositif de stockage d'énergie, notamment comprenant des cellules de batterie.

Selon l'un des aspects de l'invention, le dispositif de stockage d'énergie est placé au niveau d'un plancher d'un véhicule automobile.

Selon l'un des aspects de l'invention, les organes profilés comportent des formes, notamment d'extrémité, configurées pour permettre sa fixation ou son assemblage au sein d'un longeron du véhicule.

Selon l'un des aspects de l'invention, la structure d'absorption de choc comporte une ou des mousses d'absorption de choc au sein des cavités des organes profilés.

L'invention a également pour objet un ensemble comprenant un dispositif de stockage d'énergie et une structure d'absorption de choc tel que décrit plus haut, et configurée pour être placée sur un bord latéral du dispositif de stockage d'énergie.

Selon l'un des aspects de l'invention, la structure d'absorption de choc est configurée pour être placée sur un bord latéral d'un véhicule automobile, par exemple à l'intérieur d'un longeron.

L'invention en également pour objet un véhicule avec l'ensemble précité.

L'invention est avantageuse dans la mesure où la structure d'absorption de choc permet d'absorber de manière efficace des chocs se produisant contre cette structure d'absorption choc. En effet le ou les organes profilés sont positionnés de sorte à présenter le maximum de résistance à un effort en compression, pour la direction principale d'absorption de choc.

Lorsque le ou les organes profilés sont réalisés par extrusion ou pultrusion, les fibres de renfort sont orientées suivant la direction d'extrusion ou de pultrusion de sorte que le ou les organes profilés présentent, suivant la droite génératrice, le maximum de résistance à un effort en compression.

Cette disposition du ou des organes profilés est plus avantageuse en termes de résistance à une compression, que par exemple le cas où l'organe profilé serait placé avec sa droite génératrice qui est perpendiculaire à la direction principale d'absorption de choc.

Autrement dit, on peut dire que les fibres de renfort sont alignées suivant la direction principale d'absorption de choc de sorte à offrir une grande performance en compression.

L'invention a également pour objet un procédé de fabrication d'une structure d'absorption de choc, notamment pour véhicule automobile, présentant une direction principale d'absorption de choc, le procédé comportant les étapes suivantes :
- réaliser au moins un organe profilé en matière composite contenant des fibres de renfort, cet organe profilé présentant une forme cylindrique ayant une droite génératrice, notamment par pultrusion ou extrusion,
- éventuellement découper l'organe profilé à une dimension prédéterminée,
- placer cet organe profilé au sein de la structure d'absorption de choc avec une orientation telle que la droite génératrice est orientée suivant la direction principale d'absorption de choc.

Grâce au procédé de pultrusion, on a des fibres de renfort qui sont continues, et dans le cas d'une application à un renfort de longeron de véhicule, l'orientation des fibres de renfort continues est selon la direction transversale du véhicule. Du fait du procédé de pultrusion à défilement en continu de la matière qui sort de la machine de pultrusion, l'usage connu est, au contraire, d'utiliser les fibres continues dans la direction longitudinale du véhicule.

Dans l'invention, il y a une étape de découpe, après pultrusion, pour avoir les organes profilés de dimensions prédéterminées, puis une étape d'assemblage pour avoir la structure d'absorption de choc avec une longueur prédéterminée.

La découpe permet de s'adapter à des formes variées, par exemple dans un longeron de véhicule.

Comme dit plus haut, l'invention permet d'avoir une orientation des fibres continues dans la direction principale du choc.

Le procédé peut comporter l'étape de former les organes profilés par l'assemblage (notamment par soudage) de deux feuilles en matière composite (notamment préformées avec des ondulations), et chaque organe profilé est formé sensiblement pour moitié par l'une des feuilles et pour moitié par l'autre des feuilles.

En variante, le procédé peut comporter l'étape de former les organes profilés sur une unique feuille en matière composite, avec des formes surmoulées.

D'autres caractéristiques, détails et avantages de l'invention ressortiront plus clairement à la lecture de la description qui suit d'une part, et de plusieurs exemples de réalisation donnés à titre indicatif et non limitatif en référence aux dessins schématiques annexés d'autre part, sur lesquels :
[Fig 1] La figure 1 est une représentation schématique et partielle, en perspective, d'un ensemble avec deux structures d'absorption de choc selon un exemple de l'invention ;
[Fig. 2] La figure 2 est une représentation schématique et partielle, en perspective, de l'une des structures d'absorption de choc de la figure 1 ;
[Fig. 3] La figure 3 est une vue en coupe, d'un organe profilé de la structure d'absorption de choc de la figure 2 ;
[Fig. 4] La figure 4 est une représentation schématique et partielle, d'une structure d'absorption de choc selon un autre exemple de l'invention ;
[Fig. 5] La figure 5 est une vue en perspective, d'un organe profilé de la structure d'absorption de choc de la figure 4 ;
[Fig. 6] La figure 6 est une représentation schématique et partielle, d'une feuille d'une structure d'absorption de choc selon un autre exemple de l'invention ;
[Fig. 7] La figure 7 est une représentation en perspective, de la structure d'absorption de choc de la figure 6 ;
[Fig. 8] La figure 8 est une représentation en perspective, d'une structure d'absorption de choc selon un autre exemple de l'invention ;
[Fig. 9] La figure 9 est une représentation en perspective, de la structure d'absorption de choc de la figure 8, en vue éclatée ;
[Fig. 10] La figure 10 est une représentation en perspective, de la structure d'absorption de choc de la figure 8, avec les différents éléments représentés de manière séparée.

Les caractéristiques, variantes et les différentes formes de réalisation de l'invention peuvent être associées les unes avec les autres, selon diverses combinaisons, dans la mesure où elles ne sont pas incompatibles ou exclusives les unes par rapport aux autres. On pourra notamment imaginer des variantes de l'invention ne comprenant qu'une sélection de caractéristiques décrites par la suite de manière isolée des autres caractéristiques décrites, si cette sélection de caractéristiques est suffisante pour conférer un avantage technique et/ou pour différencier l'invention par rapport à l'état de la technique antérieur.

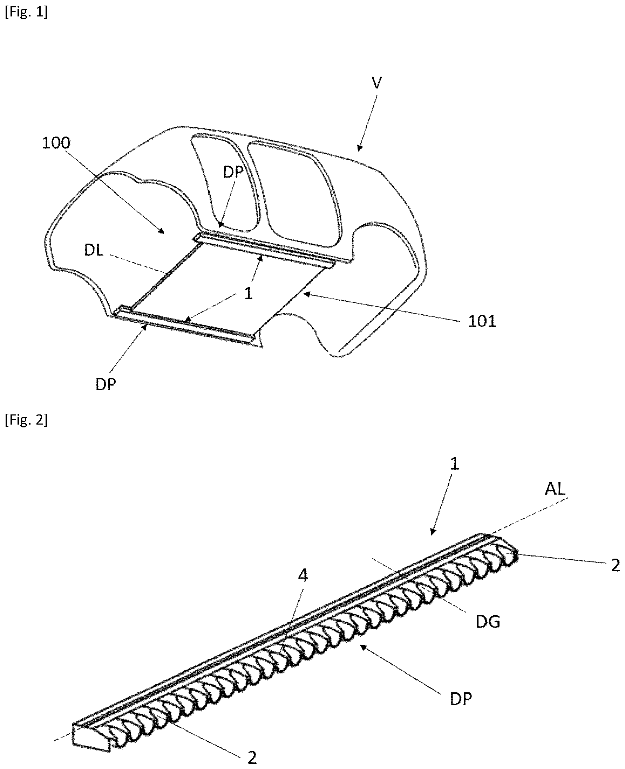

On a représenté très schématiquement, sur la figure 1, deux structures d'absorption de choc 1 pour véhicule automobile V (dont on voit seulement quelques parties sur la figure 1), appartenant à un ensemble 100 comprenant un dispositif de stockage d'énergie 101. Ce dispositif de stockage d'énergie 101 comprend des modules de cellules de batterie (non représentées) et est placé au niveau d'un plancher du véhicule V.

Les structures d'absorption de choc 1 sont placées respectivement sur deux bords latéraux parallèles du dispositif de stockage d'énergie 101, à savoir sur deux côtés du véhicule.

Chaque structure d'absorption de choc 1 est configurée pour être placée/intégrée dans un longeron du véhicule V.

Chaque structure d'absorption de choc 1 présente une direction principale d'absorption de choc DP qui est transverse par rapport à la direction longitudinale DL du véhicule. Chaque structure d'absorption de choc 1 est adaptée contre des chocs qui se produisent sur le véhicule, latéralement.

Dans l'exemple décrit, comme mieux représenté sur la figure 2, chaque structure d'absorption de choc 1 comporte une rangée d'organes profilés 2 en matière composite, par exemple une matière polymère, contenant des fibres de renfort, par exemple en verre ou en carbone. Les organes profilés 2, tous identiques, sont accolés les uns autres dans la rangée.

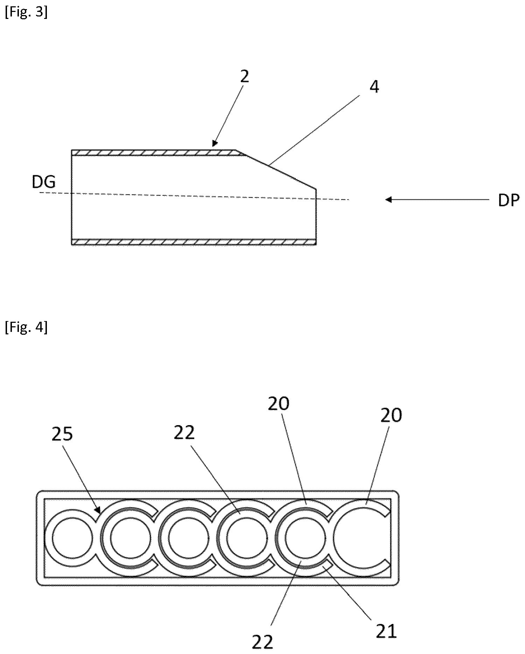

Chaque organe profilé 2 présente une forme cylindrique ayant une droite génératrice DG, cette droite génératrice étant orientée suivant la direction principale d'absorption de choc DP, comme illustré sur la figure 3.

Les organes profilés 2 sont obtenus par pultrusion, et les fibres de renfort sont orientées selon la droite génératrice DG.

Les organes profilés 2 présentent, en section transversale, une forme circulaire.

La structure d'absorption de choc 1 présente une forme générale longiligne avec un axe longitudinal AL, et la droite génératrice DG des organes profilés 2 est sensiblement perpendiculaire à l'axe longitudinal AL de la structure d'absorption de choc 1. L'axe longitudinal AL de la structure d'absorption de choc 1 est sensiblement parallèle à la direction longitudinal DL du véhicule.

Cette disposition des organes profilés 2 est plus avantageuse en termes de résistance à une compression, que par exemple le cas où l'organe profilé serait placé avec sa droite génératrice DG qui est perpendiculaire à la direction principale DP d'absorption de choc.

Autrement dit, on peut dire que les fibres de renfort sont alignées suivant la direction principale DP d'absorption de choc de sorte à offrir une grande performance en compression.

La structure d'absorption de choc présente une longueur mesurée suivant l'axe longitudinal AL, d'au moins 20 cm, notamment d'au moins 50 cm, ou d'au moins 70 cm ou 80 cm ou 1 m.

La pluralité d'organes profilés 2 sont disposés avec leurs droites génératrices DG toutes orientées suivant la direction principale d'absorption de choc DP.

Le nombre d'organes profilés au sein de la structure d'absorption de choc 1 est compris entre 5 et 50, notamment entre 20 et 40.

La pluralité d'organes profilés 2 sont disposés avec contact mutuel entre eux, en étant tangents deux à deux.

Chaque organe profilé 2 présente un rebord chanfreiné 4, issu d'une coupe géométrique entre le cylindre et un plan de coupe oblique.

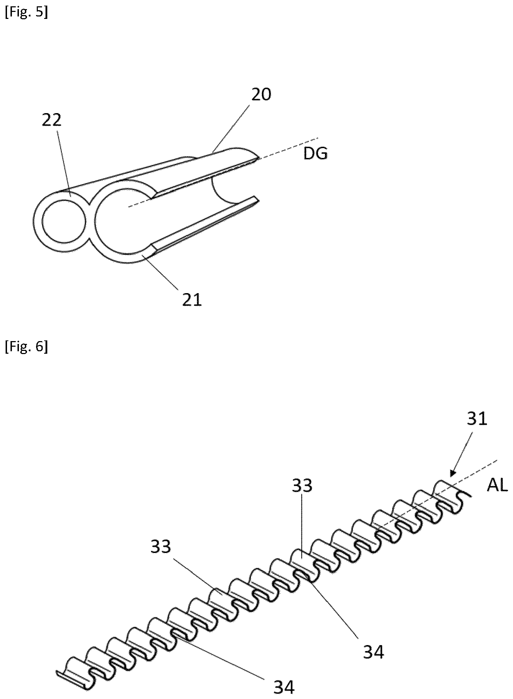

Dans un autre exemple de réalisation de l'invention illustré sur les figures 4 et 5, l'organe profilé 20 comprend, dans une section transversale perpendiculaire à sa droite génératrice DG, un contour ouvert 21 configuré pour recevoir un contour de l'organe profilé voisin 20.

Le contour ouvert 21 présente une forme en C.

Dans l'exemple décrit, chaque organe profilé 20 comprend, en section transversale, un contour fermé 22 et un contour ouvert 21 accolés l'un à l'autre.

Le diamètre du contour fermé 22 est plus petit que le diamètre du contour ouvert 21.

Le contour ouvert 21 de l'un des organes profilés 20 est configuré pour recevoir le contour fermé 22 de l'autre organe profilé voisin.

Le contour fermé 22 de l'un des organes profilés est inséré dans le contour ouvert 21 de l'autre organe profilé en faisant glisser le contour fermé 22 dans le contour ouvert 21 suivant la direction de la droite génératrice DG.

Cette manière d'emboîter deux organes profilés 20 voisins ne nécessite pas la déformation des organes profilés.

Ici, la structure d'absorption de choc 25 comprend une succession d'organes profilés 20 s'emboîtant dans l'organe profilé voisin.

L'organe profilé 20 est obtenu par extrusion ou pultrusion.

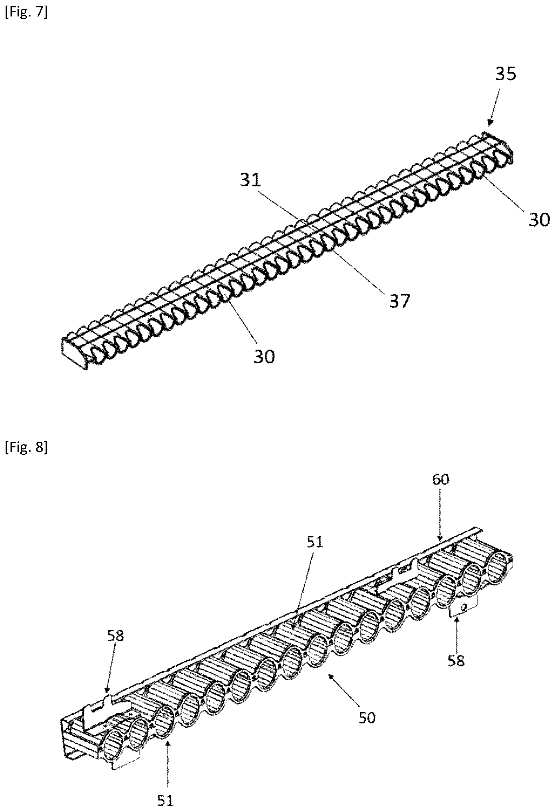

Dans une variante de réalisation de l'invention illustrée sur les figures 6 et 7, l'organe profilé 30, qui a globalement la même forme que les organes profilés 2 décrits plus haut, est formé par une feuille 31 en matière composite contenant des fibres de renfort.

La feuille 31 présente une forme ondulée, avec entre 10 ou 20 ondulations 33. Les ondulations successives sont identiques. En variante, dans la succession d'ondulations, certaines peuvent présenter des formes et/ou des dimensions différentes.

Les ondulations 33 se développent le long de l'axe longitudinal AL de la structure d'absorption de choc 35.

La feuille 31 comporte des rebords chanfreinés 34 à chacune des ondulations 33.

Les ondulations 33 de la feuille 31 sont obtenues par conformage de la feuille à chaud dans un moule. La feuille 31 pourrait aussi être obtenue par extrusion ou pultrusion par morceaux et découpes pour avoir la largeur voulue (par exemple une largeur correspondant à la direction transverse du véhicule) et avec assemblage des morceaux.

La structure d'absorption de choc 35 comporte des formes surmoulées 37 pour former les organes profilés 30.

Les formes surmoulées 37 comportent des formes en ondulation, ici des formes en ondulation qui sont complémentaires des ondulations 33 de la feuille.

La structure d'absorption de choc 35 peut ainsi comporter des cylindres alignés côté à côte, chaque cylindre étant formé pour moitié par la feuille 31 et pour moitié par une forme surmoulée 37.

D'une manière générale, la structure d'absorption de choc 1, 25 ou 35 peut être disposée avant assemblage du longeron qui comporte par exemple deux formes, par exemple deux demi-coquilles complémentaires, le plus souvent métalliques et qui sont assemblées par soudage.

Dans une variante, la structure d'absorption de choc 1, 25 ou 35 est configurée pour être intégrée sur une ou des traverses de plancher.

La structure d'absorption de choc 1, 25 ou 35 pourrait comporter une ou des mousses d'absorption de choc au sein des cavités des organes profilés.

On va maintenant décrire, en référence aux figures 8 à 10, une structure d'absorption de choc 50 selon un autre exemple de mise en oeuvre de l'invention.

Comme dans les exemples décrits plus haut, la structure d'absorption de choc 50 comprend des organes profilés 51, sous la forme de cylindres.

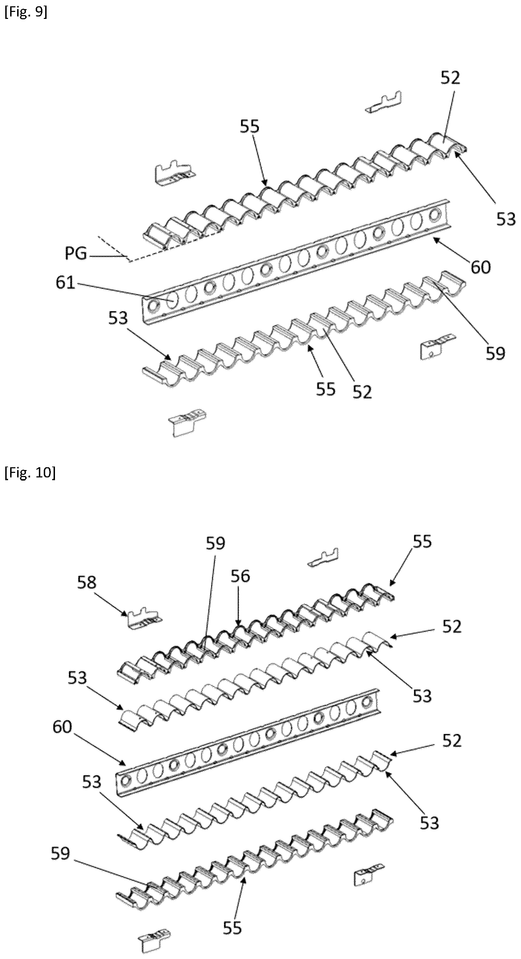

Les organes profilés 51 sont formés par deux feuilles 52 en matière composite (visibles isolément sur la figure 10), et chaque organe profilé 51 est formé pour moitié par l'une des feuilles 52 et pour moitié par l'autre des feuilles 52. En particulier, chaque feuille 52 forme une succession de demi-cylindres 53, et les demi-cylindriques 53 des deux feuilles 52 sont en regard deux à deux pour former une rangée de cylindriques complets qui sont les organes profilés 51.

Dans cet exemple de réalisation de l'invention, les deux feuilles 52 sont assemblées ensemble, par soudure.

Les demi-cylindriques 53 de chaque feuille 52 sont tangents à un plan géométrique PG illustré sur la figure 9. Ce plan géométrique définit un plan de joint entre les deux feuilles 52.

Les deux feuilles 52 sont réalisées avec des formes d'interface 55, obtenues par surmoulage, configurées pour, permettre la fixation de la structure d'absorption de choc 50 sur une partie structurelle (non représentée) d'un véhicule automobile. Ces formes d'interface 55 sont représentées sur la figure 10, de manière isolée des feuilles 52, à des fins d'explications.

Cependant il faut comprendre que ces formes d'interface 55 sont liées aux feuilles 52 du fait du surmoulage, comme cela est représenté sur la figure 9. Les deux feuilles 52 avec leurs formes d'interface 55 sont assemblées ensemble comme deux pièces distinctes.

Les formes d'interface 55, en matière plastique, sont présentes sur toute la longueur de la feuille 52, et définissent des bandeaux de matière, ici deux bandeaux de matière parallèles, qui longent les bords des ondulations sur la feuille 52.

Les formes d'interface 55 forment ainsi un cadre 56 à ondulations, qui entoure la feuille 52 correspondante.

Des pattes de fixation 58, par exemple métalliques, sont fixées sur les formes d'interface 55, permettant de solidariser la structure d'absorption de choc 50 sur une partie structurelle du véhicule automobile.

Les formes d'interface 55 sont configurées pour réaliser la jonction, par soudage, entre les deux feuilles 52.

Les formes d'interface 55 définissent des barreaux 59, parallèles entre eux, chaque barreau étant présent à la jonction entre deux demi-cylindres 53 voisins de la feuille 52.

Bien entendu, les formes d'interface peuvent présenter d'autres géométries que celles décrites plus haut.

La structure d'absorption de choc 50 comporte une plaque de renfort 60, par exemple en acier ou en aluminium ou en matériau composite, placée sur un côté des organes profilés 51, ici sur le côté qui est l'arrière des organes profilés (c'est-à-dire par exemple du côté le plus intérieur par rapport au véhicule). Cette plaque de renfort 60 permet de renforcer la tenue mécanique de la structure d'absorption de choc 50. Cette plaque de renfort 60 s'étend tout le long de la rangée d'organes profilés 51. La plaque de renfort 60 est sensiblement rectangulaire, avec des ajours 61 (ajours qui permettent notamment un allègement de poids).

## Revendications

1. Structure d'absorption de choc (1, 25, 35, 50), notamment pour véhicule automobile, présentant une direction principale (DP) d'absorption de choc, et comportant au moins un organe profilé (2, 20, 30, 51) en matière composite contenant des fibres de renfort, cet organe profilé présentant une forme sensiblement cylindrique ayant une droite génératrice (DG), cette droite génératrice étant orientée suivant la direction principale (DP) d'absorption de choc.

2. Structure d'absorption de choc selon la revendication précédente, dans laquelle l'organe profilé est formé par au moins une feuille (31, 52) en matière composite contenant des fibres de renfort.

3. Structure d'absorption de choc selon la revendication précédente, dans laquelle le ou les organes profilés (20) sont réalisés par une seule feuille en matière composite.

4. Structure d'absorption de choc selon la revendication 2, dans laquelle le ou les organes profilés (51) sont formés par deux feuilles (52) en matière composite, et chaque organe profilé (51) est notamment formé pour moitié par l'une des feuilles (52) et pour moitié par l'autre des feuilles (52), chaque feuille formant notamment une succession de demi-cylindres.

5. Structure d'absorption de choc selon la revendication précédente, dans laquelle l'une au moins des feuilles (52), notamment les deux feuilles, est/sont réalisée(s) avec des formes d'interface (55), notamment obtenues par surmoulage, configurées pour, par exemple, permettre la fixation de la structure d'absorption de choc (50) sur une partie structurelle d'un véhicule automobile

6. Structure d'absorption de choc selon l'une des revendications précédentes, dans laquelle la structure d'absorption de choc (1, 25, 35) présente une forme générale longiligne avec un axe longitudinal (AL), et la droite génératrice de l'organe profilé (2, 20, 30) est sensiblement perpendiculaire à l'axe longitudinal de la structure d'absorption de choc.

7. Structure d'absorption de choc selon l'une des revendications précédentes, dans laquelle la pluralité d'organes profilés (2, 20, 30) sont disposés côte à côte, notamment suivant une ou plusieurs rangées.

8. Ensemble (100) comprenant un dispositif de stockage d'énergie et une structure d'absorption de choc (1, 25, 35, 50) selon l'une des revendications précédentes, et configurée pour être placée sur un bord latéral du dispositif de stockage d'énergie (101).

9. Procédé de fabrication d'une structure d'absorption de choc, notamment pour véhicule automobile, présentant une direction principale d'absorption de choc, le procédé comportant les étapes suivantes :
- réaliser au moins un organe profilé (2, 20, 30, 50) en matière composite contenant des fibres de renfort, cet organe profilé présentant une forme cylindrique ayant une droite génératrice, notamment par pultrusion ou extrusion,
- éventuellement découper l'organe profilé à une dimension prédéterminée,
- placer cet organe profilé (2, 20, 30, 50) au sein de la structure d'absorption de choc avec une orientation telle que la droite génératrice est orientée suivant la direction principale d'absorption de choc.

10. Procédé selon la revendication précédente, comportant l'étape de former les organes profilés par l'assemblage, notamment par soudage, de deux feuilles (52) en matière composite, et chaque organe profilé est formé sensiblement pour moitié par l'une des feuilles et pour moitié par l'autre des feuilles.
